# FASCICULE DE BREVET EUROPEEN

(11) **EP 0 396 439 B1**
(45) Date de publication et mention de la délivrance du brevet: **20.10.1993**
(21) Numéro de dépôt: 90400873.7
(22) Date de dépôt: 30.03.1990
(51) Int. Cl.: H02B 1/052

(54) **Profilé chapeau pour la fixation d'appareils encliquetables**
Leistungsverteilereinrichtung für Elektroinstallationen
Power divider device for an electrical installation

(30) Priorité: 03.05.1989 FR 8906151
(43) Date de publication de la demande: 07.11.1990
(73) Titulaire: TELEMECANIQUE, 92504 Rueil Malmaison Cedex (FR)
(72) Inventeur: Nourry, Daniel, F-21000 Dijon (FR); Thierry, Jean-Pierre, F-21560 Couternon (FR)
(74) Mandataire: de Saint-Palais, Arnaud Marie

(56) Documents cités:
- DE-U- 8 804 707
- GB-A- 2 056 179

## Description

La présente invention concerne un profilé chapeau allégé servant à fixer et porter des appareils encliquetables.

Les profilés supports d'appareils encliquetables font l'objet de normes, notamment de normes européennes, à savoir la norme EN 50 022 pour les profilés chapeau de largeur 35 mm et la norme EN 50 023 pour les profilés chapeau de largeur 75 mm.

Ces profilés sont généralement utilisés pour porter des appareils électriques ; les faces arrière ou les socles des appareils sont munis d'éléments appropriés à l'encliquetage sur les bords des ailes des profilés.

En particulier, les profilés chapeau définis par la norme EN 50 023 conviennent pour fixer et porter des appareils relativement lourds, mais ils ont l'inconvénient d'être eux-mêmes assez lourds et difficiles à percer, car ils sont nécessairement obtenus par pliage d'une tôle d'épaisseur 3 mm.

Dans certains cas, il peut être souhaitable d'utiliser des profilés chapeau moins lourds que ceux définis par les normes précitées, mais cependant aptes à porter des appareils, platines ou socles munis d'éléments d'encliquetage spécifiques des profilés définis par ces normes.

L'invention a pour but de rendre des profilés chapeau moins lourds et plus faciles à percer que les profilés chapeau normalisés, en leur permettant de recevoir des appareils, platines ou socles également encliquetables sur des profilés normalisés de même largeur.

Selon l'invention, le profilé chapeau pour la fixation d'appareils encliquetables est réalisé par mise en forme d'omega d'une bande métallique d'épaisseur prédéterminée e₁, les ailes du profilé étant déformées près de leur extrémité libre de manière que leur bord ait une épaisseur utile fictive e₂ entre deux zones d'appui prévues pour les appareils à encliqueter et situées des deux côtés des ailes, l'épaisseur fictive e₂ est celle prévue pour un profilé normalisé de même largeur et elle est sensiblement supérieure à l'épaisseur réelle e₁.

On peut ainsi réaliser par exemple un profilé de largeur 75 mm dont l'épaisseur fictive e₂ des bords d'ailes est de 3 mm comme défini dans la norme européenne EN 50 023, par pliage d'une tôle d'acier dont l'épaisseur est sensiblement inférieure à 3 mm, par exemple de l'ordre de 2 mm à 2,5 mm, pour obtenir un profilé moins lourd, moins coûteux et plus facile à percer lorsqu'on veut ménager des orifices pour vis de fixation. Les parties déformées des ailes du profilé forment un ressaut de préférence déporté, ou un rebord en biais de préférence orienté, vers l'âme du profilé par rapport à la partie des ailes proche de l'âme.

D'autres caractéristiques et avantages de l'invention seront bien compris à l'aide de la description qui suit d'un mode de réalisation.
La figure 1 montre en coupe transversale un profilé normalisé classique de 75 mm ;
Les figures 2 et 3 sont des coupes similaires de deux variantes de réalisation d'un profilé selon l'invention à largeur de 75 mm ;
La figure 4 représente en coupe le montage d'une platine support d'appareils électriques et d'un dispositif répartiteur sur le profilé selon l'invention ; et
Les figures 5 et 6 illustrent le montage d'un appareil ou d'une platine sur le bord du profilé selon l'invention.

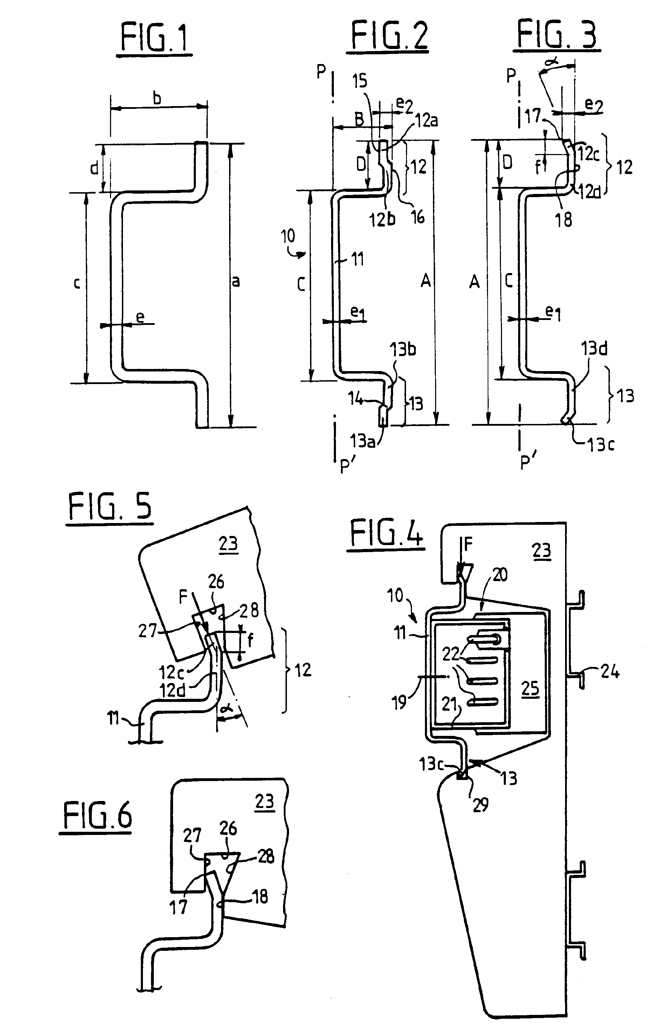

Le profilé chapeau normalisé classique, représenté à titre comparatif sur la figure 1, est réalisé par pliage en omega d'une tôle en acier d'épaisseur 3 mm. Ce profilé a une largeur a de 75 mm et une hauteur b de 25 mm. Il présente une âme de largeur c de 50 mm et deux ailes reliées à l'âme et de largeur d de 12,5 mm telle que a = c + 2d.

Le profilé chapeau allégé 10 selon l'invention, illustré sur la figure 2, présente une âme 11 et deux ailes 12, 13 reliées à l'âme. Le profilé est obtenu par pliage en omega d'une tôle d'acier d'épaisseur e₁ = 2 mm. Le profilé présente une largeur A de 75 mm et une hauteur B de 15 mm. L'âme 11 du profilé a une largeur C de 50 mm et ses ailes 12, 13 ont une largeur D de 12,5 mm telle que A = C + 2D. La hauteur B est la même que celle d'un profilé normalisé de 35 mm ; elle permet donc d'aligner un tel profilé avec celui de l'invention pour fixer des appareils qui formeront un ensemble d'aspect homogène et elle permet un passage sous goulotte en montage sur châssis.

Les extrémités 12a, 13a des ailes 12, 13 sont déformées par pliage pour former un ressaut 14 qui les déporte vers le plan P-P' de l'âme 11 par rapport aux parties 12b, 13b des ailes qui sont reliées à l'âme. Les extrémités 12a, 13a sont parallèles aux parties 12b, 13b. Le ressaut 14 est déterminé pour faire apparaître entre deux zones d'appui opposées, c'est-à-dire entre une face 15 de l'extrémité 12a, 13a et une face opposée 16 de la partie 12b, 13b une distance e₂ de 3 mm qui constitue pour un appareil encliquetable une épaisseur fictive e₂ égale à l'épaisseur normalisée e du profilé de la figure 1.

Dans la variante de la figure 3, les extrémités 12c, 13c des ailes 12, 13 du profilé chapeau sont inclinées pour se rapprocher du plan P-P' de l'âme par rapport aux parties 12d, 13d des ailes qui sont reliées à l'âme. La pente des extrémités et leur largeur f sont déterminées pour que la distance e₂ entre deux zones d'appui opposées, à savoir l'arête 17 de l'extrémité 12c, 13c la plus proche du plan P-P' et la face opposée 18 de la partie 12d, 13d, soit égale à 3 mm, c'est-à-dire constitue ici encore pour un appareil encliquetable une épaisseur fictive e₂ égale à l'épaisseur normalisée e du profilé de la figure 1.

La figure 4 montre le profilé 10 selon l'invention combiné à un dispositif répartiteur 20 comprenant un boîtier isolant 21 qui loge des barres métalliques de distribution électrique 22. Le boîtier 21 est fixé au profilé par des vis d'axe 19 traversant des trous percés dans l'âme 11 du profilé. Une platine 23 support d'appareils électriques est encliquetée au moyen de formes femelles appropriées sur les extrémités des ailes 12, 13. La platine porte elle-même des éléments de profilés 24, par exemple normalisés de 35 mm, destinés à porter des appareils raccordables aux barres 22 via des connecteurs tels que 25.

Les figures 5 et 6 montrent, à plus grande échelle, comment se monte une platine 23 sur l'extrémité 12c de l'aile 12 du profilé de la figure 3. Il en serait de même pour un appareil électrique apte au montage sur un profilé normalisé. La platine présente une encoche 26 dont les bords 27, 28 sont inclinés l'un par rapport à l'autre. Cette inclinaison relative est sensiblement comparable à la pente de l'extrémité 12c de l'aile 12, de manière à faciliter l'engagement de la platine sur le profilé chapeau (figure 5). Un ressort associé à la platine 23 exerce sur le bord de l'aile 12 un effort F. Dans la position encliquetée (figure 6), obtenue après emboîtement d'une partie 29 de la platine sur l'extrémité 13c de l'autre aile 13, les bords 27, 28 de l'encoche 26 sont respectivement en appui sur l'arête 17 et la face 18 de l'aile 12. Lorsque la platine 23 est métallique, le bon contact ainsi obtenu entre la platine et le profilé produit une liaison de terre satisfaisante.

Bien entendu, les dimensions ci-dessus indiquées sont données aux tolérances usuelles près. Les parties déformées des ailes peuvent avantageusement avoir une largeur inférieure ou égale à environ la moitié de la largeur des ailes.

## Revendications

1. Profilé chapeau pour la fixation d'appareils encliquetables, réalisé par mise en forme d'omega d'une bande métallique d'épaisseur (e₁) prédéterminée et présentant une âme (11) et deux ailes (12, 13), caractérisé par le fait que :
- les ailes (12, 13) du profilé sont déformées vers leurs extrémités libres de manière que le bord des ailes présente, pour les appareils à encliqueter, une épaisseur utile fictive (e₂), cette épaisseur étant déterminée entre deux zones d'appui (15, 16 ; 17, 18) situées de part et d'autre de l'aile,
- l'épaisseur fictive (e₂) est égale à l'épaisseur d'un profilé normalisé de même largeur et sensiblement supérieure à l'épaisseur réelle (e₁).

2. Profilé chapeau selon la revendication 1, caractérisée par le fait que les parties déformées (12a, 13a ; 12c, 13c) des ailes (12, 13) ont une largeur égale ou inférieure à environ la moitié de la largeur des ailes.

3. Profilé selon la revendication 1 ou 2, caractérisé par le fait que les parties déformées (12a, 13a) des ailes (12, 13) forment un ressaut qui les déporte vers le plan (P-P') de l'âme (11) du profilé par rapport aux parties des ailes reliées à l'âme (11).

4. Profilé selon la revendication 1 ou 2, caractérisé par le fait que les parties déformées (12c, 13c) des ailes (12, 13) sont inclinées pour se rapprocher du plan (P-P') de l'âme (11) du profilé par rapport aux parties des ailes reliées à l'âme (11).

5. Profilé selon l'une des revendications 1 à 4, caractérisé par le fait que la largeur (A) du profilé (10) est de 75 mm et l'épaisseur fictive (e₂) est égale à 3 mm comme défini dans la norme européenne EN 50 023.

6. Profilé selon l'une des revendications 2 à 5, caractérisé par le fait que la hauteur (B) du profilé est de 15 mm.

## Patentansprüche

1. Hutschiene zur Befestigung von einrastbaren Geräten, hergestellt durch Biegen eines Metallbands einer vorbestimmten Dicke (e₁) in Form eines Omega, das einen Steg (11) und zwei Flügel (12, 13) aufweist, dadurch gekennzeichnet, daß
- die Flügel (12, 13) der Schiene zu ihren freien Enden hin derart verformt sind, daß der Rand der Flügel für die einzurastenden Geräte eine fiktive Nutzdicke (e₂) aufweist, wobei diese Dicke zwischen zwei Auflagezonen (15, 16; 17,18) bestimmt wird, die sich auf der einen und der anderen Seite des Flügels befinden,
- die fiktive Dicke (e₂) gleich der Dicke einer Standardschiene gleicher Breite und wesentlich größer als die reelle Dicke (e₁) ist.

2. Hutschiene nach Anspruch 1, dadurch gekennzeichnet, daß die verformten Bereiche (12a, 13a; 12c, 13c) der Flügel (12, 13) eine Breite gleich der oder geringer als etwa die Hälfte der Breite der Flügel haben.

3. Hutschiene nach Anspruch 1 oder 2, dadurch gekennzeichnet, daß die verformten Bereiche (12a, 13a) der Flügel (12, 13) einen Vorsprung bilden, der sie in Bezug auf die mit dem Steg (11) verbundenen Bereiche der Flügel zur Ebene (P-P') des Stegs (11) der Schiene verschiebt.

4. Schiene nach Anspruch 1 oder 2, dadurch gekennzeichnet, daß die verformten Bereiche (12c, 13c) der Flügel (12, 13) geneigt sind, um sich in Bezug auf die mit dem Steg (11) verbundenen Bereiche der Flügel der Ebene (P-P') des Stegs (11) der Schiene anzunähern.

5. Schiene nach einem der Ansprüche 1 bis 4, dadurch gekennzeichnet, daß die Breite (A) der Schiene (10) 75 mm und die fiktive Dicke (e₂) gleich 3 mm ist, wie es in der europäischen Norm EN 50 023 definiert ist.

6. Schiene nach einem der Ansprüche 2 bis 5, dadurch gekennzeichnet, daß die Höhe (B) der Schiene 15 mm beträgt.

## Claims

1. A top hat rail for fixing snap-fit apparatus, formed by shaping in the form of an omega a metal strip of predetermined thickness (e₁) and having a web (11) and two flanges (12, 13), characterized by the fact that :
- the flanges (12, 13) of said rail are deformed towards their free ends so that the edge of the flanges has, for the apparatus to be snap-fitted, a useful fictitious thickness (e₂), this thickness being determined between two support zones (15, 16 ; 17, 18) situated on each side of the flange ;
- said fictitious thickness (e₂) is equal to the thickness of a standardized rail and substantially greater than the real thickness (e₁).

2. A top hat rail as claimed in claim 1, characterized by the fact that the deformed portions (12a, 13a ; 12c, 13c) of the flanges (12, 13) have a width equal to or less than about half the width of the flanges.

3. A top hat rail as claimed in claim 1 or 2, characterized by the fact that said deformed portions (12a, 13a) of the flanges (12, 13) form a step which offsets them towards the plane (P-P') of the web (11) of the rail with respect to the portions of the flanges connected to the web (11).

4. A top hat rail as claimed in claim 1 or 2, characterized by the fact that said deformed portions (12c, 13c) of the flanges (12, 13) are inclined so as to be closer to the plane (P-P') of the web (11) of the rail with respect to the portions of the flanges connected to the web (11).

5. The top hat rail as claimed in one of claims 1 to 4, characterized by the fact that the width (A) of the rail (10) is 75 mm and the fictitious thickness (e₂) is equal to 3 mm, as defined in the European standard EN 50 023.

6. The top hat rail as claimed in one of claims 1 to 5, characterized by the fact that the height (B) of the rail is 15 mm.
